# EUROPEAN PATENT APPLICATION

(11) **EP 4 280 325 A1**
(43) Date of publication of application: **22.11.2023**
(21) Application number: 21919090.7
(22) Date of filing: 15.12.2021
(51) Int. Cl.: H01M 8/0656, C25B 1/042

(54) **PROTON-CONDUCTING SOEC AND OXYGEN ION-CONDUCTING SOFC JOINT APPARATUS**

(30) Priority: 14.01.2021 CN 202110050829; 14.01.2021 CN 202120100109 U
(71) Applicant: Shanghai Institute of Applied Physics, Chinese Academy of Science, Jiading District Shanghai 201800 (CN)
(72) Inventor: WANG, Jianqiang, Shanghai 201800 (CN); YAN, Huijuan, Shanghai 201800 (CN); HONG, Chunfeng, Shanghai 201800 (CN); MA, Chengguo, Shanghai 201800 (CN); GUO, Yujing, Shanghai 201800 (CN); DU, Xianlong, Shanghai 201800 (CN); XIAO, Guoping, Shanghai 201800 (CN)
(74) Representative: Grauel, Andreas
(86) International application number: PCT/CN2021/138399
(87) International publication number: WO 2022/151902

(57) **Abstract**

The present invention relates to a proton-conducting SOEC and oxygen ion-conducting SOFC joint apparatus, a hydrogen production system is a proton conduction-type SOEC steam electrolysis hydrogen production apparatus, an electric power supply system provides an electrolysis electricity source to the hydrogen production system, a water supply system provides raw material water to the hydrogen production system, a hydrogen gas allocation system provides a protective hydrogen gas to the hydrogen production system, hydrogen gas produced by the hydrogen production system is stored in a hydrogen purification and buffer storage system, an electricity generation system is an oxygen ion conduction-type SOFC electricity generation apparatus, the hydrogen gas allocation system provides raw material hydrogen to the electricity generation system, an electricity management system transports electrical energy generated from the consumption of hydrogen gas by the electricity generation system into the electricity management system, and generated heat is stored in a molten salt thermal storage system. According to the proton-conducting SOEC and oxygen ion-conducting SOFC joint apparatus of the present invention, the hydrogen production apparatus lowers manufacturing difficulty while performing highly efficient electrolytic hydrogen production, the electricity generation apparatus generates electrical energy and also uses molten salt thermal storage to recover high-quality heat generated from electricity generation, and high overall energy utilization efficiency is achieved.

## Description

### Technical Field

The present invention relates to high-temperature hydrogen production and utilization, and more specifically to a proton-conducting SOEC and oxygen ion-conducting SOFC joint apparatus.

### Background Art

Water electrolysis hydrogen production and hydrogen gas fuel cell electricity generation are considered to be one of the effective ways to make full use of renewable energy and stabilize the power grid to balance the peak-valley hours. However, how to improve energy utilization efficiency remains a major challenge in the water electrolysis hydrogen production and hydrogen gas fuel cell electricity generation.

The existing water electrolysis hydrogen production can be classified into high-temperature water electrolysis hydrogen production and low-temperature water electrolysis hydrogen production. The low-temperature water electrolysis hydrogen production includes alkaline water electrolysis hydrogen production and PEM (Proton Exchange Membrane) water electrolysis hydrogen production, etc. The DC (direct current) conversion rate of low-temperature water electrolysis hydrogen production is generally between 40%-55%, with an operating temperature generally maintained at 60-90 °C. High temperature water electrolysis hydrogen production refers to oxygen ion conduction-type SOEC, the DC conversion rate of which can reach more than 90%, with an operating temperature of 600 °C-1000 °C.

The existing hydrogen gas fuel cell can also be classified into high-temperature fuel cell and low-temperature fuel cell. The low-temperature fuel cell is represented by PEMFC (Proton Exchange Membrane Fuel Cell), with an operating temperature of 60-80 °C. The high-temperature fuel cell mainly refers to SOFC (Solid Oxide Fuel Cell), which can operate at temperatures as high as 1000°C. In practical applications, the energy utilization efficiency of low-temperature fuel cell does not exceed 70% at best. The energy utilization efficiency of high-temperature fuel cell can reach more than 95% if heat is recovered.

In summary, from the perspective of energy conversion efficiency, it is the most ideal approach to using high-temperature electrolysis hydrogen production and high-temperature electricity generation. However, the operating temperature of high-temperature water electrolysis hydrogen production is excessively high, and hydrogen gas needs to be continuously introduced during the electrolysis process to ensure that the hydrogen electrode is not inactivated and remains stable, leading to high manufacturing difficulty and high manufacturing costs.

### SUMMARY OF THE INVENTION

In order to solve the above problems of high manufacturing difficulty in the prior art, the present invention provides a proton-conducting SOEC and oxygen ion-conducting SOFC joint apparatus.

The proton-conducting SOEC and oxygen ion-conducting SOFC joint apparatus of the present invention comprises an electric power supply system, a water supply system, a hydrogen production system, a hydrogen purification and buffer storage system, a hydrogen gas allocation system, an electricity generation system, an electricity management system and a molten salt thermal storage system, wherein the hydrogen production system is a proton conduction-type SOEC steam electrolysis hydrogen production apparatus, wherein the electric power supply system is connected to the hydrogen production system to provide electrolysis electricity source to the hydrogen production system, wherein the water supply system is connected to the hydrogen production system to provide raw material water to the hydrogen production system, wherein the hydrogen gas allocation system is connected to the hydrogen production system to provide protective hydrogen gas to the hydrogen production system, wherein the hydrogen purification and buffer storage system is connected to the hydrogen production system to store the hydrogen gas produced by the hydrogen production system into the hydrogen purification and buffer storage system, wherein the electricity generation system is an oxygen ion conduction-type SOFC electricity generation apparatus, wherein the hydrogen gas allocation system is connected to the electricity generation system to provide raw material hydrogen to the electricity generation system, wherein the electricity management system is connected to the electricity generation system to transport electrical energy generated from the consumption of hydrogen gas by the electricity generation system into the electricity management system, and wherein the molten salt thermal storage system is connected to the electricity generation system to store heat generated from the consumption of hydrogen gas by the electricity generation system into the molten salt thermal storage system.

Preferably, the hydrogen production system comprises an electrolytic cell, a steam generator, a gas preheater and a gas cooling separation assembly, wherein the electrolytic cell is a proton conduction-type solid oxide electrolytic cell for high-temperature steam electrolysis hydrogen production, wherein the water supply system is connected with the steam generator to heat the raw material water from the water supply system into steam, wherein the gas preheater is connected between the electrolytic cell and the steam generator, wherein the steam enters an anode side of the electrolysis cell through the gas preheater, then is electrolyzed on the anode side and loses electrons to produce oxygen, wherein the hydrogen ions synthesized by electrolysis pass through the electrolyte layer to a cathode side of the electrolytic cell and gain electrons to produce hydrogen gas, wherein hydrogen gas as a protective gas enters the cathode side of the electrolytic cell through the gas preheater, and wherein the gas cooling separation assembly is connected downstream of the electrolytic cell to remove oxygen and transport hydrogen gas into the hydrogen purification and buffer storage system.

Preferably, the electrolytic cell is maintained at an operating temperature between 400 °C and 700 °C.

Preferably, the electricity generation system comprises a fuel cell, an air purifier, an air booster, a gas preheater and a hydrogen gas internal circulation device, wherein the fuel cell is an oxygen ion conduction-type solid oxide fuel cell for high-temperature electricity generation, wherein the air purifier is connected to the fuel cell through the air booster and the gas preheater in turn, wherein air is treated by the air purifier, through the air booster into the gas preheater, and then into a cathode side of the fuel cell, wherein the hydrogen gas enters an anode side of the fuel cell through the gas preheater, wherein hydrogen gas internal circulation device is connected between the fuel cell and the gas preheater, wherein unreacted hydrogen gas re-enters the anode side of the fuel cell for recycling through the hydrogen gas internal circulation device together with hydrogen gas from the gas preheater, wherein the fuel cell is connected to the electricity management system to output the generated electric power, and wherein the fuel cell is connected to the molten salt thermal storage system to output the generated heat.

Preferably, the fuel cell is maintained at an operating temperature between 700 °C and 1000 °C.

Preferably, the proton-conducting SOEC and oxygen ion-conducting SOFC joint apparatus further comprises an electrical control system, wherein the electrical control system provides action electricity source and control strategy for the entire proton-conducting SOEC and oxygen ion-conducting SOFC joint apparatus.

Preferably, the electric power supply system comprises a high-voltage alternating current, an electric power distributor, an excess electric power, a step-down transformer, an AC-DC converter and a constant voltage / constant current regulation module, wherein high-voltage alternating current is supplied to an electric equipment for normal use through the electric power distributor, wherein the excess electric power is connected to the hydrogen production system through the step-down transformer, the AC-DC converter and the constant voltage / constant current regulation module in turn.

Preferably, the proton-conducting SOEC and oxygen ion-conducting SOFC joint apparatus further comprises an external hydrogen supply system, wherein the external hydrogen supply system inputs hydrogen gas to the hydrogen purification and buffer storage system.

Preferably, the proton-conducting SOEC and oxygen ion-conducting SOFC joint apparatus further comprises a hydrogen utilization system, wherein the hydrogen gas allocation system provides hydrogen gas to the hydrogen utilization system.

Preferably, the electricity management system includes an electric power distributor, a DC-DC converter, a DC-AC converter and a step-up transformer, wherein the electric power distributor is respectively connected with the electricity generation system, the DC-DC converter and the DC-AC converter, such that the electric power from the electricity generation system is respectively transmitted to the DC-DC converter and the DC-AC converter through the power distributor, wherein the DC-DC converter is directly connected to a DC equipment, and wherein the DC-AC converter is connected back to a power grid through the step-up transformer.

According to the proton-conducting SOEC and oxygen ion-conducting SOFC joint apparatus of the present invention, the proton conduction-type SOEC steam electrolysis hydrogen production apparatus can reduce manufacturing difficulty of hydrogen production system, reduce manufacturing costs while performing highly efficient electrolytic hydrogen production. No hydrogen gas needs to be continuously introduced to protect hydrogen electrode during stable operation. The oxygen ion conduction-type SOFC electricity generation apparatus generates electrical energy and also uses molten salt thermal storage to recover high-quality heat generated from electricity generation, so that hydrogen gas energy is fully utilized and high overall energy utilization efficiency is achieved.

### BRIEF DESCRIPTION OF THE DRAWINGS

FIG. 1 is an overall structure schematic diagram of the proton-conducting SOEC and oxygen ion-conducting SOFC joint apparatus according to a preferred embodiment of the present invention.
FIG. 2 is a specific structure schematic diagram of the electric power supply system of FIG. 1.
FIG. 3 is a specific structure schematic diagram of the hydrogen production system of FIG. 1.
FIG. 4 is a specific structure schematic diagram of the electricity generation system of FIG. 1.
FIG. 5 is a specific structure schematic diagram of the electricity management system of FIG. 1.

### DESCRIPTION OF THE ENABLING EMBODIMENT

In conjunction with the accompanying drawings, preferred embodiments of the present invention are given and described in detail below.

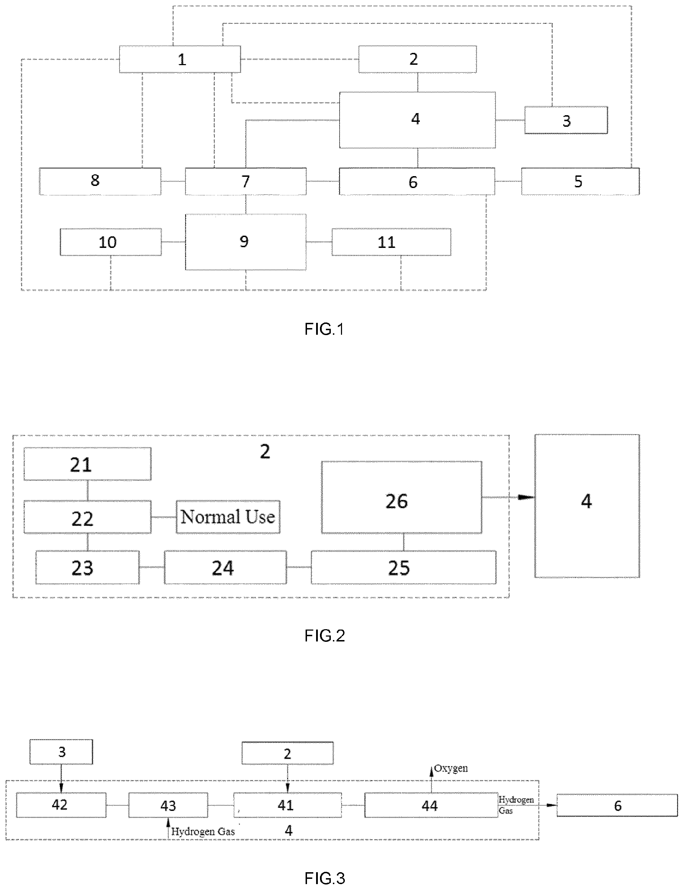

As shown in FIG. 1, a proton-conducting SOEC and oxygen ion-conducting SOFC joint apparatus according to a preferred embodiment of the present invention comprises an electrical control system 1, an electric power supply system 2, a water supply system 3, a hydrogen production system 4, an external hydrogen supply system 5, a hydrogen purification and buffer storage system 6, a hydrogen gas allocation system 7, a hydrogen utilization system 8, an electricity generation system 9, an electricity management system 10 and a molten salt thermal storage system 11. In which, the electrical control system 1 provides action electricity source and control strategy to other systems 2, 3, 4, 5, 6, 7, 8, 9, 10, 11. The external hydrogen supply system 5 introduces hydrogen gas into the hydrogen purification and buffer storage system 6. The hydrogen gas allocation system 7 provides hydrogen gas to the hydrogen utilization system 8. The hydrogen production system 4 is a high-temperature proton conduction-type SOEC steam electrolysis hydrogen production apparatus. The electric power supply system 2 provides a DC electrolysis electricity source to the hydrogen production system 4. The water supply system 3 provides raw material water to the hydrogen production system 4. The hydrogen gas allocation system 7 provides a protective hydrogen gas to the hydrogen production system 4. Hydrogen gas produced by the hydrogen production system 4 is stored in the hydrogen purification and buffer storage system 6. The electricity generation system 9 is a high-temperature oxygen ion conduction-type SOFC electricity generation apparatus. The hydrogen gas allocation system 7 provides raw material hydrogen to the electricity generation system 9. Electrical energy generated from the consumption of hydrogen gas by the electricity generation system 9 is transported into the electricity management system 10, and generated heat is stored in the molten salt thermal storage system 11.

According to the proton-conducting SOEC and oxygen ion-conducting SOFC joint apparatus of the present invention, the high-temperature proton conduction-type SOEC steam electrolysis hydrogen production apparatus is combined with the high-temperature oxygen ion conduction-type SOFC electricity generation apparatus. The temperature required by the hydrogen production system 4 is reduced, and thus the manufacturing difficulty of the hydrogen production system 4 is reduced. The electricity generation system 9 can direct use the electric power and recover high-quality heat source close to 1000 °C, maximizing the utilization of the energy contained in hydrogen gas.

As shown in FIG. 1, the electrical control system 1 is connected to the electrical equipment in other systems 2, 3, 4, 5, 6, 7, 8, 9, 10, 11, including strong and weak electric rooms, and has the functions of supplying electricity source to the electrical equipment, monitoring system operation, adjusting working parameters, and collecting, recording and storing data.

As shown in FIGS. 1 and 2, the electric power supply system 2 is respectively connected with the electrical control system 1 and the hydrogen production system 4. The high-voltage alternating current 21 from the power grid is supplied to the electric equipment for normal use through the electric power distributor 22. The excess electric power 23 is distributed to the hydrogen production system 4, and the electrical energy is converted into hydrogen gas for storage. Specifically, the excess electric power 23 is connected to the hydrogen production system 4 by a step-down transformer 24, an AC-DC converter 25 and a constant voltage / constant current regulation module 26 in turn, providing a stable electrolysis electricity source to the hydrogen production system 4.

As shown in FIG. 1, the water supply system 3 is respectively connected with the electrical control system 1 and the hydrogen production system 4 through pipelines. Specifically, the water supply system 3 includes a purified water device, a water storage tank and a water pump. The raw material water flows through the purified water device into the water storage tank. There is a liquid level detection device in the water storage tank. When the water level in the water storage tank is excessively low, water is automatically added through an automatic water replenishment device. The water pump is connected to the water storage tank to deliver raw material water to the hydrogen production system 4.

As shown in FIGS. 1 and 3, the hydrogen production system 4 is respectively connected with the electrical control system 1, the electric power supply system 2, the water supply system 3 and the hydrogen purification and buffer storage system 6, which is also connected with the hydrogen gas allocation system 7 to obtain a small amount of hydrogen gas as a protective gas at start-up. The core of hydrogen production system 4 is to produce hydrogen gas by steam electrolysis at high-temperature through a proton conduction-type solid oxide electrolytic cell (SOEC) 41. The operating temperature is maintained between 400 °C and 700 °C. Specifically, the high-temperature proton conduction-type electrolyte is used. The materials for the electrolyte are mostly BCZY and BZCYYb. When the temperature is in the range of 400 °C to 700 °C, the electrolyte will have a relatively good ability to conduct protons. For the high-temperature steam electrolysis hydrogen production, steam is introduced to the anode side of the electrolytic cell 41, and hydrogen gas is produced on the cathode side of the electrolytic cell 41. The hydrogen production system 4 further comprises a steam generator 42, a gas preheater 43 and a gas cooling separation assembly 44. The water supply system 3 is connected with the steam generator 42 to heat the raw material water from the water supply system 3 into steam. The gas preheater 43 is used to preheat steam and hydrogen gas as a protective gas into the electrolytic cell 41. Specifically, steam enters the anode side of the electrolytic cell 41 through the gas preheater 43, and hydrogen gas as a protective gas enters the cathode side of the electrolytic cell 41 through the gas preheater 43. After DC is provided by the electric power supply system, the steam is electrolyzed on the anode side of the electrolytic cell 41 and loses electrons to produce oxygen. The hydrogen ions synthesized by electrolysis pass through the electrolyte layer to the cathode side of the electrolytic cell and gain electrons to produce hydrogen gas. After stabilization, the protective hydrogen gas is turned off. The gas cooling separation assembly 44 is connected downstream of the electrolytic cell 41 to remove the oxygen and transport hydrogen gas into the hydrogen purification and buffer storage system 6.

As shown in FIG. 1, the external hydrogen supply system 5 is respectively connected with the electrical control system 1 and the hydrogen purification and buffer storage system 6, providing additional hydrogen gas independently of the hydrogen production system 4. The hydrogen gas supply method can be a long-pipe trailer, pipeline transportation, etc.

As shown in FIG. 1, the upstream of the hydrogen purification and buffer storage system 6 is connected with the hydrogen production system 4 and the external hydrogen supply system 5, and the downstream is connected with the hydrogen gas allocation system 7. The hydrogen purification and buffer storage system 6 includes a purification part and a hydrogen gas storage part. The purification part is mainly used to remove impurity of the hydrogen gas from the hydrogen production system 4 and the external hydrogen supply system 5 for subsequent storage. The temperature swing adsorption purification, pressure swing adsorption purification, membrane separation purification, etc. can be selected. According to the actual situation, considering energy density, use occasions and other issues, metal hydrogen gas storage, high pressure hydrogen gas storage, liquid hydrogen gas storage and other methods can be used for the hydrogen gas storage part.

As shown in FIG. 1, the upstream of the hydrogen gas allocation system 7 is connected with the hydrogen purification and buffer storage system 6, and the downstream is connected with the hydrogen utilization system 8 and the electricity generation system 9. The hydrogen gas in the hydrogen purification and buffer storage system 6 is delivered to the hydrogen utilization system 8 and the electricity generation system 9 in a certain proportion according to the change in hydrogen gas demand. The hydrogen gas allocation system 7 includes a valve group composed of pressure reducing valve, check valve, four-way valve, pneumatic ball valve, etc., and monitoring equipment composed of pressure sensor and flow meter.

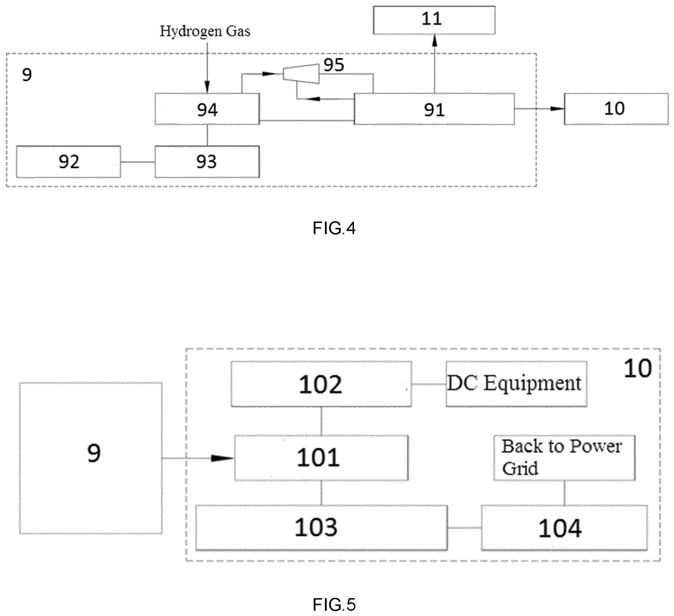

As shown in FIGS. 1 and 4, the electricity generation system 9 is respectively connected with the electrical control system 1, the hydrogen gas allocation system 7, the electricity management system 10 and the molten salt thermal storage system 11. The core of the electricity generation system 9 is to generate electricity at high temperature through an oxygen ion conduction-type solid oxide fuel cell (SOFC) 91. The operating temperature is 700 °C to 1000 °C. No cooling system is needed to maintain the operating temperature, and generated heat by the reaction has a high recovery value. The electricity generation system 9 further comprises an air purifier 92, an air booster 93, a gas preheater 94 and a hydrogen gas internal circulation device 95. Air is treated by the air purifier 92, through the air booster 93 into the gas preheater 94, and then into the cathode side of the fuel cell 91. The hydrogen gas enters the anode side of the fuel cell 91 through the gas preheater 94. Unreacted hydrogen gas re-enters the anode side of the fuel cell 91 for recycling through the hydrogen gas internal circulation device 95 together with the hydrogen gas from the gas preheater 94. The fuel cell 91 is connected with the electricity management system 10 to output the generated electric power. The fuel cell 91 is connected with the molten salt thermal storage system 11 to output the generated heat.

As shown in FIGS. 1 and 5, the electricity management system 10 is respectively connected with the electrical control system 1 and the electricity generation system 9. The electricity management system 10 includes an electric power distributor 101, a DC-DC converter 102, a DC-AC converter 103 and a step-up transformer 104. The electric power from the electricity generation system 9 is respectively transmitted to the DC-DC converter 102 and DC-AC converter 103 through the electric power distributor 101. The DC-DC converter 102 is directly connected to the DC equipment. The DC-AC converter 103 is connected back to the power grid through the step-up transformer 104.

As shown in FIG. 1, the molten salt thermal storage system 11 is respectively connected with the electrical control system 1 and the electricity generation system 9, for storing generated heat from the electricity generation system 9 and heat recovery. The recovered heat can be used for gas preheating of the entire device, plant heating, etc.

The foregoing description refers to preferred embodiments of the present invention and is not intended to limit the scope of the present invention. Various changes can be made to the foregoing embodiments of the present invention. That is to say, all simple and equivalent changes and modifications made in accordance with the claims of the present invention and the content of the description fall into the protection scope of the patent of the present invention. What is not described in detail in the present invention is conventional technical content.

## Claims

1. A proton-conducting SOEC and oxygen ion-conducting SOFC joint apparatus, comprising an electric power supply system (2), a water supply system (3), a hydrogen production system (4), a hydrogen purification and buffer storage system (6), a hydrogen gas allocation system (7), an electricity generation system (9), an electricity management system (10) and a molten salt thermal storage system (11), wherein the hydrogen production system (4) is a proton conduction-type SOEC steam electrolysis hydrogen production apparatus, wherein the electric power supply system (2) is connected to the hydrogen production system (4) to provide electrolysis electricity source to the hydrogen production system (4), wherein the water supply system (3) is connected to the hydrogen production system (4) to provide raw material water to the hydrogen production system (4), wherein the hydrogen gas allocation system (7) is connected to the hydrogen production system (4) to provide protective hydrogen gas to the hydrogen production system (4), wherein the hydrogen purification and buffer storage system (6) is connected to the hydrogen production system (4) to store the hydrogen gas produced by the hydrogen production system (4) into the hydrogen purification and buffer storage system (6), wherein the electricity generation system (9) is an oxygen ion conduction-type SOFC electricity generation apparatus, wherein the hydrogen gas allocation system (7) is connected to the electricity generation system (9) to provide raw material hydrogen to the electricity generation system (9), wherein the electricity management system (10) is connected to the electricity generation system (9) to transport electrical energy generated from the consumption of hydrogen gas by the electricity generation system (9) into the electricity management system (10), and wherein the molten salt thermal storage system (11) is connected to the electricity generation system (9) to store heat generated from the consumption of hydrogen gas by the electricity generation system (9) into the molten salt thermal storage system (11).

2. The proton-conducting SOEC and oxygen ion-conducting SOFC joint apparatus of claim 1, wherein the hydrogen production system (4) comprises an electrolytic cell (41), a steam generator (42), a gas preheater (43) and a gas cooling separation assembly (44), wherein the electrolytic cell (41) is a proton conduction-type solid oxide electrolytic cell for high-temperature steam electrolysis hydrogen production, wherein the water supply system (3) is connected with the steam generator (42) to heat the raw material water from the water supply system (3) into steam, wherein the gas preheater (43) is connected between the electrolytic cell (41) and the steam generator (42), wherein the steam enters an anode side of the electrolysis cell (41) through the gas preheater (43), then is electrolyzed on the anode side and loses electrons to produce oxygen, wherein the hydrogen ions synthesized by electrolysis pass through the electrolyte layer to a cathode side of the electrolytic cell (41) and gain electrons to produce hydrogen gas, wherein hydrogen gas as a protective gas enters the cathode side of the electrolytic cell (41) through the gas preheater (43), and wherein the gas cooling separation assembly (44) is connected downstream of the electrolytic cell (41) to remove oxygen and transport hydrogen gas into the hydrogen purification and buffer storage system (6).

3. The proton-conducting SOEC and oxygen ion-conducting SOFC joint apparatus of claim 2, wherein the electrolytic cell (41) is maintained at an operating temperature between 400 °C and 700 °C.

4. The proton-conducting SOEC and oxygen ion-conducting SOFC joint apparatus of claim 1, wherein the electricity generation system (9) comprises a fuel cell (91), an air purifier (92), an air booster (93), a gas preheater (94) and a hydrogen gas internal circulation device (95), wherein the fuel cell (91) is an oxygen ion conduction-type solid oxide fuel cell for high-temperature electricity generation, wherein the air purifier (92) is connected to the fuel cell (91) through the air booster (93) and the gas preheater (94) in turn, wherein air is treated by the air purifier (92), through the air booster (93) into the gas preheater (94), and then into a cathode side of the fuel cell (91), wherein hydrogen gas enters an anode side of the fuel cell (91) through the gas preheater (94), wherein the hydrogen gas internal circulation device (95) is connected between the fuel cell (91) and the gas preheater (94), wherein unreacted hydrogen gas re-enters the anode side of the fuel cell (91) for recycling through the hydrogen gas internal circulation device (95) together with hydrogen gas from the gas preheater (94), wherein the fuel cell (91) is connected to the electricity management system (10) to output the generated electric power, and wherein the fuel cell (91) is connected to the molten salt thermal storage system (11) to output the generated heat.

5. The proton-conducting SOEC and oxygen ion-conducting SOFC joint apparatus of claim 4, wherein the fuel cell (91) is maintained at an operating temperature between 700 °C and 1000 °C.

6. The proton-conducting SOEC and oxygen ion-conducting SOFC joint apparatus of claim 1, wherein the proton-conducting SOEC and oxygen ion-conducting SOFC joint apparatus further comprises an electrical control system (1), wherein the electrical control system (1) provides action electricity source and control strategy for the entire proton-conducting SOEC and oxygen ion-conducting SOFC joint apparatus.

7. The proton-conducting SOEC and oxygen ion-conducting SOFC joint apparatus of claim 1, wherein the electric power supply system (2) comprises a high-voltage alternating current (21), an electric power distributor (22), an excess electric power (23), a step-down transformer (24), an AC-DC converter (25) and a constant voltage / constant current regulation module (26), wherein high-voltage alternating current (21) is supplied to an electric equipment for normal use through the electric power distributor (22), wherein the excess electric power (23) is connected to the hydrogen production system (4) through the step-down transformer (24), the AC-DC converter (25) and the constant voltage / constant current regulation module (26) in turn.

8. The proton-conducting SOEC and oxygen ion-conducting SOFC joint apparatus of claim 1, wherein the proton-conducting SOEC and oxygen ion-conducting SOFC joint apparatus further comprises an external hydrogen supply system (5), wherein the external hydrogen supply system (5) inputs hydrogen gas to the hydrogen purification and buffer storage system (6).

9. The proton-conducting SOEC and oxygen ion-conducting SOFC joint apparatus of claim 1, wherein the proton-conducting SOEC and oxygen ion-conducting SOFC joint apparatus further comprises a hydrogen utilization system (8), wherein the hydrogen gas allocation system (7) provides hydrogen gas to the hydrogen utilization system (8).

10. The proton-conducting SOEC and oxygen ion-conducting SOFC joint apparatus of claim 1, wherein the electricity management system (10) includes an electric power distributor (101), a DC-DC converter (102), a DC-AC converter (103) and a step-up transformer (104), wherein the electric power distributor (101) is respectively connected with the electricity generation system (9), the DC-DC converter (102) and the DC-AC converter (103), such that the electric power from the electricity generation system (9) is respectively transmitted to the DC-DC converter (102) and the DC-AC converter (103) through the power distributor (101), wherein the DC-DC converter (102) is directly connected to a DC equipment, and wherein the DC-AC converter (103) is connected back to a power grid through the step-up transformer (104).
